# EUROPEAN PATENT APPLICATION

(11) **EP 1 524 505 A1**
(43) Date of publication of application: **20.04.2005**
(21) Application number: 03425668.5
(22) Date of filing: 16.10.2003
(51) Int. Cl.: G01F 23/02, G01F 23/284

(54) **Liquid level measurement by means of a sight glass and additional electronic means**

(71) Applicant: Vernazzano, Marco, 20159 Milano (IT); Riva, Natale, 24030 Brembate Di Sopra (Bergamo) (IT)
(72) Inventor: Vernazzano, Marco, 20159 Milano (IT); Riva, Natale, 24030 Brembate Di Sopra (Bergamo) (IT)
(74) Representative: Siniscalco, Fabio

(57) **Abstract**

An apparatus (1) for the indication of the level of a liquid contained within a tank, to be applied externally to the tank, comprising:
- a visual indicator (2) of the level of liquid having a sealed cavity (6) and at least one transparent wall (8) for making the interior of the cavity visible,
- a liquid bypass structure (3) for supporting the visual indicator applicable to the tank and such as to allow the passage of liquid between the tank and the cavity.

The apparatus is characterised by additionally comprising an electronic measurement device (35) for the level of a liquid derivable from the tank suitable for transmitting a signal carrying information relating to the level of the liquid in the tank to the outside of the apparatus.

## Description

The present invention relates to an apparatus for the indication of the level of a liquid contained within a tank.

Visual type level indicators comprising a container body in which a cavity for housing liquid is formed and having at least one transparent wall which allows the direct viewing of the liquid are known. Such a visual indicator, frequently prescribed by legal regulations, is placed in communication with the tank in such a manner that, by the principal of communicating vessels, the liquid reaches the same level within the cavity defined by it as that reached in the tank.

European patent EP 1106976 describes one particular structure of a visual indicator comprising a U-shaped body, provided with a viewing slot and a compression plate to be fixed to the U-shaped body in order to maintain a transparent glass wall and the liquid container in position. In this patent it is pointed out that the visual indicator described is particularly adapted for boilers containing hot water, saturated steam, diathermic oil at relatively high pressure and temperature. The structure described in this preceding document has advantages in terms of ease of assembly and disassembly.

However, conventional visual indicators do not appear to be adapted to satisfying the current requirements of the sectors of use because, for example, they are not integratable into the monitoring and control systems that may be used in automated plants.

The aim of the present invention is that of providing a level indicator apparatus which is improved with respect to those conventionally known.
The aim of the present invention is achieved by an apparatus as defined by the attached claim 1 whilst, its preferred embodiments are defined by claims 2-25.

In order to better understand the invention and appreciate the advantages thereof, some of its non limiting exemplificative embodiments are described in the following, with reference to the attached drawings, wherein:
- figures 1A and 1B show two side views, of which one is partially in longitudinal section, of a first "direct connection" embodiment of an apparatus according to the invention;
- figure 2A shows an exploded view of a module of a first visual indicator that may be used in said apparatus;
- figure 2B shows a cross section of said module;
- figure 3A shows a microwave based measurement device that may be used in said apparatus and schematically shows its connection to a control unit and to means of interfacing with a user;
- figure 3B shows some details of the measurement device of figure 3A in greater detail;
- figures 4A and 4B show two lateral views, of which one is partially in longitudinal section, of a second "parallel connection" embodiment of an apparatus according to the invention;
- figure 5A shows a lateral view of a third "independent connection" embodiment of an apparatus according to the invention;
- figure 5B shows a junctional element that may be used in the independent connection apparatus;
- figures 6A and 6B show a parallel connection apparatus using a second type of visual indicator;
- figura 7 shows a cross section of said second type of visual indicator;
- figure 8A shows an independent connection apparatus using a third type of visual indicator;
- figura 8B shows a cross section of said third type of visual indicator;
- figures 9A and 9B show a parallel connection apparatus using a fourth type of visual indicator;
- figure 9C shows a cross section of said fourth type of visual indicator;
- figure 10A shows an independent connection apparatus using a fifth type of visual indicator;
- figure 10B shows a cross section of said fifth type of visual indicator;
- figures 11A and 11B show a parallel connection apparatus using a sixth type of visual indicator;
- figure 12 shows a microwave based measurement device associated with means of heat dissipation;
- figure 13 shows an example of the application of an indicator apparatus in accordance to a tank.

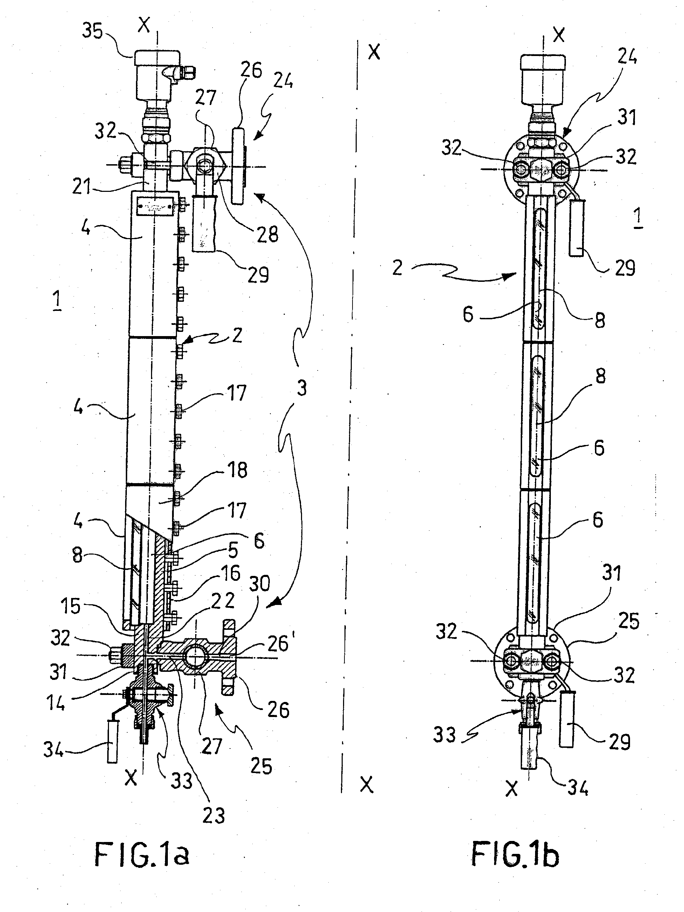

Figures 1A, 1B show a first embodiment of an apparatus for the indication of the level of a liquid in a tank (not shown). The apparatus 1 comprises a first liquid level visual indicator 2 and a tank liquid bypass structure 3 suitable for supporting the first visual indicator 2. Furthermore, a liquid level measurement device 35 is also operatively associated with the same bypass structure 3.

The visual indicator 2 is entirely conventional in itself and, according to the example shown in figures 1B and 1B, is of multiple type and namely has a modular structure comprising a plurality of modules 4 (for example, three modules) shaped into a box and overlapping along a vertical axis X-X (parallel to the longitudinal axis of the indicator itself). The number of modules depends on the viewing height range desired.

The first visual indicator 2 comprises a single container 5 for the entire visual indicator 2 and common to all the modules 4 shaped, for example, as a box defining a cavity 6 therein, which extends along the longitudinal axis X-X.

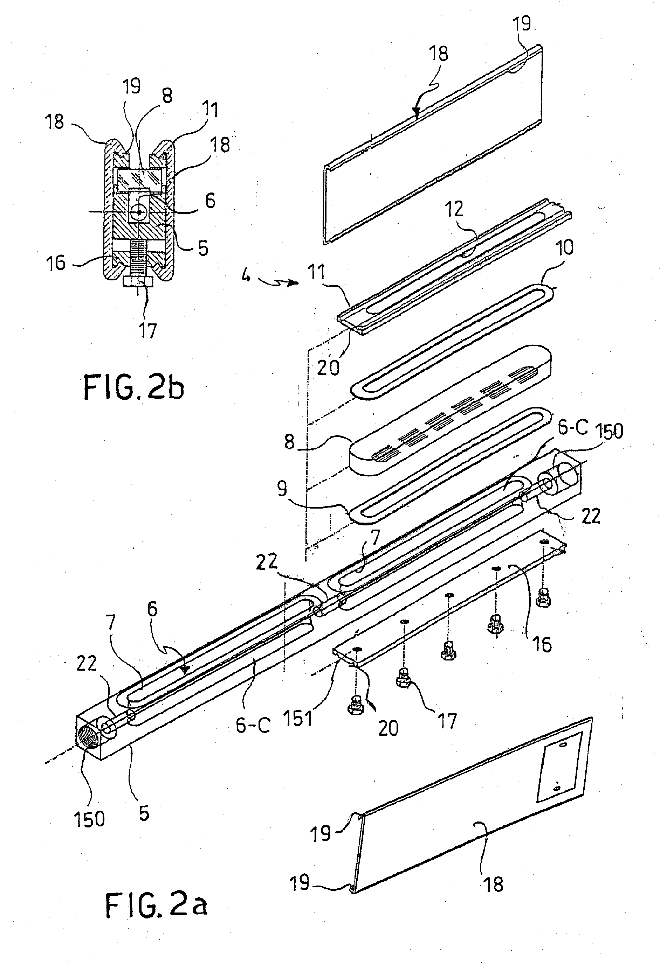

Figures 2A and 2B show the structure of one of said modules 4, in accordance with one example embodiment of the invention, in greater detail. The container 5 is equipped with a plurality of longitudinal windows 7 (of which only 2 are shown in figure 2A) which expose a corresponding length of the cavity 6. Each module 4 includes a single window 7. Advantageously, the cavity 6 is not uniform in the longitudinal direction and has chambers 6-C (for example, of square or rectangular cross section) and constrictions or bottlenecks which form themselves into tubular inner junctional ducts 22 between the chambers 6-C or are arranged at the ends of the latter. In figure 2A only two of the three chambers 6-C of the visual indicator 2 of figures 1A and 1B are shown.

The presence of such bottlenecks 22 is advantageous in that they increase the structural resistance of the indicator with regard to the internal pressure of the cavity 6. The chambers 6-C may have, for example, a cross sectional width of 15 mm and a depth (estimated perpendicularly to the plane of the window 7) of approx. 18 mm. The tubular ducts 22 have a cross sectional area less than that of the chamber 6-C. For example, in the case wherein they are of tubular shape they have a diameter comprised of between 8 and 10 mm.

With reference to a single window 7, it is held sealed by a plate of transparent material 8, with the interpositioning of the sealing gaskets 9 and 10, and by an outer covering frame 11 having a slot 12 aligned with the window 7.

In the case of the so-called "reflection" indicator, the transparent plate 8 is made of vitreous material which has knurling facing towards the interior of the cavity 6 and which extends in the longitudinal direction from the plate itself. As is known to those skilled in the art, thanks to the viscosity of the liquid contained within the cavity 6, these knurlings allow the formation of a liquid upper surface which is not perfectly flat and which allows for better accentuation of the liquid level reached.

Furthermore, the module 4 comprises a corresponding base guide 16, for example, plate-like and fixable to one wall of the container 5, opposite the container wall in which the window 7 itself is formed.

The above mentioned structural elements are enclosed together by two outer abutments 18 which extend perpendicularly to the base guide 16 and to the covering frame 11. In more detail, each abutment 16 comprises opposing edges 19 shaped in such a manner as to engage themselves, respectively, with grooves 20 made within the outer covering frame 11 and in the base guide 16. A plurality of screws 17, inserted within the specific holes 151 of the base guide 16, acting on the container 5 develop a locking force which allows the maintenance of all the structural elements of the module 4 in place.

With reference to figures 1A and 1B, it should be noted that the container 5 is extended by an upper stem 21 and a lower stem 15 outwith of the abutments 18 which enclose a generally central length of them. Both the lower 15 and upper 21 stems are equipped with tubular ducts 22, in the same axis as the cavity 6 and in communication with it, connected to an additional duct 23 perpendicular to it and having the role of an inlet for the bypass structure 3 derived liquid.

With reference to the bypass structure 3 (figures 1A and 1B), this includes an upper bypass unit 24 and a lower bypass unit 25, independent of each other and substantially identical in their structures. Each of the bypass units 24 and 35 comprises a flange 26 connected to a tap or gate valve 27, having a drive shaft 28 workable by a handle 29.

It is to be observed that, alternatively to the flange 26 connections to the tank or, according to the terminology used within the specific technical sector, "process connections" of any other suitable type may be used.

Each flange 26 has in inlet 26' intended to be placed in communication with a corresponding through hole (not shown) formed in the tank to which the apparatus 1 is to be applied. The tap 27 and the flange 26 are traversed by a passing channel 30 which with one end terminates with the inlet 26' and, with the other, is placed in communication with the second duct 22.

The taps, each equipped with a corresponding valve body (which is conventional per se and hence not described in detail), are intended to tap the passing channels 30 for regulating (by opening or interrupting communication) the flow of liquid between the cavity 6 and the tank.

Furthermore, each upper and lower bypass unit 24 and 25 is, for example, detachable from the visual indicator 2 and is fixable to this through appropriate means comprising, preferably, a locking bracket 31 and two pins or ties 32. The bracket 31 is arranged in such a manner that the lower stem 15 (or, analogously, the upper 21) of the container 5 is interposed between the bracket itself and the related tap 27, whilst the ties 32 (equipped with the related nuts) cross through the bracket 31 in order to screw into the holes present in the body of the tap 27.

Advantageously, the lower part of the visual indicator 2 comprises a conventional discharge or bleed tap 33 with a control handle 34 connected to one outflowing end of the duct 22 which crosses the lower stem 15. Such discharge tap 33 is equipped with a connecting part 14 (for example, formed with external threading) intended to be used for screwing into the corresponding thread with which the internal wall of one tubular cavity 150 of one outermost area of the container 5, connected to the first duct 22 is equipped. Alternatively, a closing stopper may be used for the first duct 22, for example, equipped with a corresponding connecting part analogous to 14.

The liquid level measurement device 35 is suitable to transmit a signal carrying the information relating to the level of liquid within the tank outwith of the apparatus 1. The measurement device 35 is operatively associated with the bypass structure 3 in such a manner as to interact with the liquid derivable from the tank through the structure itself. In particular, according to the example of figures 1A and 1B, the measurement device 35 is supported by the same visual indicator 2 and is mechanically connected to the container 5.

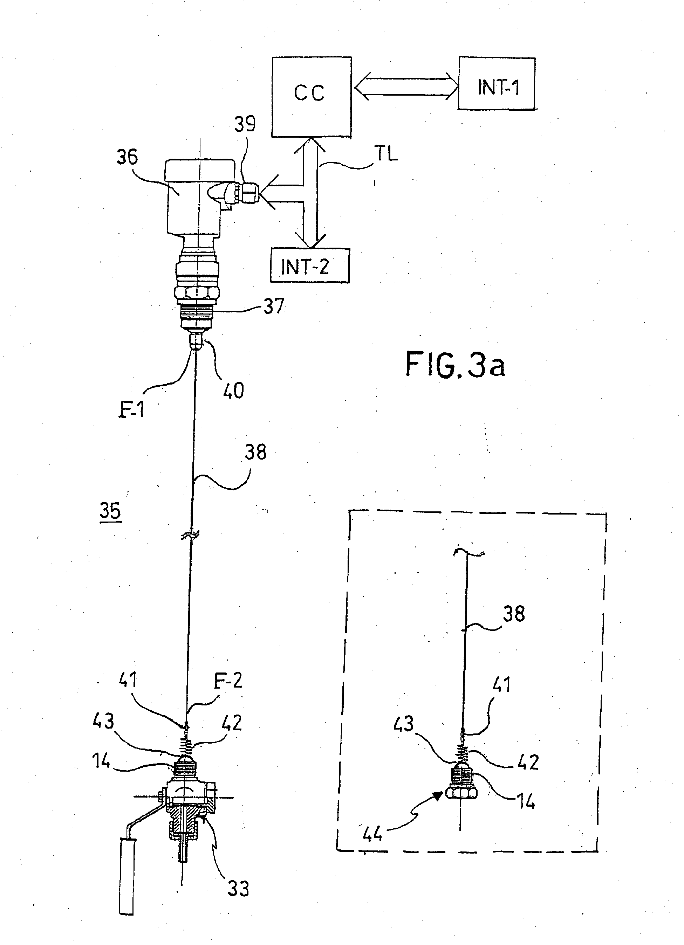

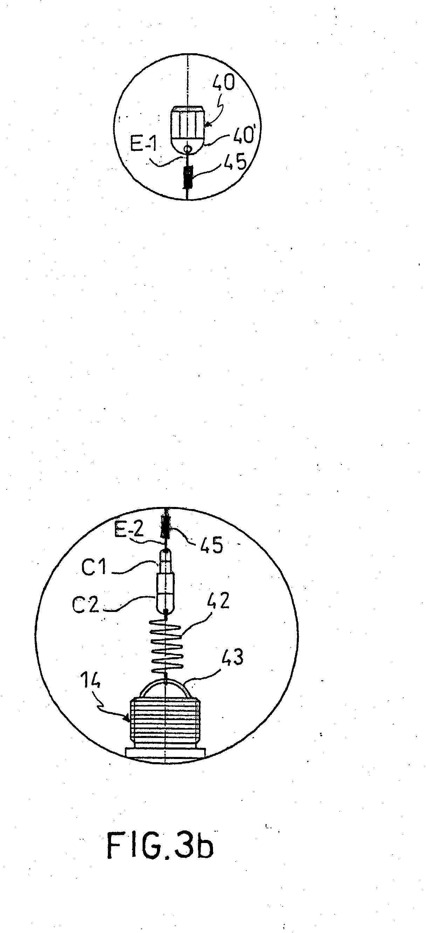

Reference is now made to figure 3A which shows one particular example of the measurement device 35 and shows in detail constitutive elements which, for clarity of representation, have been omitted in the preceding figures. The measurement device 35 is made up, preferably, by a detector or sensor of the type based on the transmission and reflection of electromagnetic radiation and is equipped with an outer casing 36 containing electronic circuitry, means 37 of attachment of said casing to one end of the upper stem 21 and a guided propagation element 38.

The casing 36 includes (not shown) a transmitter such as to generate electromagnetic waves, preferably, by impulse and at the wavelength of microwaves, a receiver for the waves reflected from the surface layer of the liquid of which the level is detected or measured, and an electronic circuit for the control of such devices and the processing of the signals received (for example, an electronic data processor such as a microprocessor). For example, the casing 36, the transmitter (including a microwave source), the receiver and the control and processing circuitry are commercially available and are, normally, used in microwave based level sensors for use within a tank.

The casing 36 made, for example, in metal or in plastic material is fitted with an output connector 39 which allows the signals related to the measured level of liquid to be provided to the outside and to connect an appropriate device electrical supply cable 35.

Furthermore, for the attachment of the casing 36 to the upper stem 21, the casing itself is equipped with an externally threaded connector 37 (for example, of tubular shape) to be inserted and screwed into a corresponding hollow end of the upper stem 21, having threaded inner walls.

The microwave guided propagation element 38 is, preferably, a thread-like electrical conductor made of a cable formed from many metallic wires (for example, of steel) intertwined cord-like.

The diameter of the cable 38 is selected in such a manner as to be adapted to the diameter of the thinnest lengths of the cavity 6 (namely, the tubular ducts 22). In particular, the value of the diameter of the cable is less than that of the narrowest lengths of the cavity 6 in which it is housed, by an amount such as to not obstruct them and to avoid that granular particles present within the liquid may become blocked between the cable 38 and the walls of the cavity thus obstructing the natural passage of liquid and/or disturbing the propagation of the microwave signal along the cable itself.

It is appreciated, following experimental tests, that it is particularly advantageous that the cable 38 has a diameter comprised of between 10% and 60% of the diameter of the narrowest lengths of the cavity in which it is housed. More preferably, the diameter of the cable 38 is comprised between 10% and 40% of the minimum diameter of the cavity in which it is housed. For example, the cable 38 has, preferably, a diameter comprised of between 0.8 mm and 4.8 mm, or, more preferably, comprised of between 0.8 mm and 3.2 mm. A preferred value of this diameter is equal to approx. 2 mm. It is observed that the guide cables used according to the known art for microwave based level sensors inserted into tanks have a diameter greater than that used herein.

Alternatively, instead of the intertwined cable 38 a coaxial cable or an electromagnetic wave irradiation antenna may be used.

Reference is now made, besides to that of figure 3A, also to figure 3B wherein enlargements of some details of figure 3A are shown. One upper end E-1 of the guide cable 36 is mechanically connected to a part of the casing 36 through a junctional element made, for example, with a nut 40 having a capped or semi-spherical head 40'. Advantageously, the nut 40 (for example, in stainless steel) has internal threading which allows it to be screwed onto a threaded appendage or junction which protrudes from the connector 37 of the measurement device 35 itself. The semi-spherical head 40' is equipped with a through hole for the insertion of the end E-1 of the guide cable 38, which, formed as a buttonhole (or loop), is blocked by a perforated cylinder 45.

Furthermore, such upper end E-1 of the guide cable 38 is electrically connected to an output terminal (for example, a gold contact not shown in the figure) of the microwave transmitter housed within the casing 36.

Advantageously, one lower end E-2 of the guide cable 38 is fixed in such a manner as to ensure that the cable itself is substantially rectilinear. In particular, the lower end E-2 may be fixed to the discharge tap 33. Advantageously, the fixing of the lower end E-2 is carried out through rotatable hinging means 41 which avoid the tangling of the guide cable 38 during assembly.

Furthermore, the fixing of the lower end E-2 is also carried out using an elastic element 42 such as to maintain the cable 28 under tension.

According to one particular example, the rotatable hinging means 42 comprise a first cylindrical element C1 hinged to a second cylindrical element C2 in such a manner as to allow the free rotation of one element with respect to the other (around a common axis). The first cylindrical element C1 is equipped with a through hole into which is inserted the lower end E-2 of the guide cable 38 which, formed as a buttonhole, is blocked by an additional perforated cylinder 45. The second cylindrical element C2 has another through hole into which is inserted one end of the elastic element 42.

The elastic element 42 is, in particular, a metallic helical spring which maintains the cable 38 itself under tension. Furthermore, another end of the helical spring 42 is fixed to a small cap 43 typically, metallic, which may be fixed (for example, by welding) to the connecting part 14 of the discharge tap 33. Within the same figure 3A is also shown how the helical spring 42 is connected to the stopper 44 through the cap 43, in the case in which the bleed tap is not used.

The use of the hinging means 41 is particularly advantageous because, avoiding the tangling of the guide cable 38, avoids its being damaged which would, otherwise, be possible considering its potentially reduced diameter.

It should be noted that according to the above described first embodiment (hereinafter, denominated "direct connection configuration") the guide cable 38 extends inside the same cavity 6 of the visual indicator 2. Such first embodiment is particularly advantageous since it has a particularly reduced encumbrance and may not require the presence of any welding.

The apparatus 1 is applied to be tank in such a manner as to be in communication with this. The visual indicator 2 may be used in a conventional manner for directly observing the level of the liquid within the cavity 6 through the window 7, indicative, thanks to the principal of communicating vessels, of the level of liquid in the tank. The microwave based measurement device 35 emits a microwave impulse incident signal through its own transmitter which propagates along the guide cable 38. Such impulse signal collides with the upper surface layers of the liquid housed within the cavity 6 and is partly reflected by the latter. The reflected impulse radiation propagates along the guide cable 38 until reaching the receiver installed within the casing 36. The control and processing circuit of the measurement device 35 converts the transmission and reception times of the signal into an electrical signal corresponding to a distance representative of the level reached by the liquid in the tank. The electrical signal corresponding to the distance may be forwarded to the output connector 39 to which a cable or a transmission line TL is connectable which transports this information towards an indicator device (remote with respect the apparatus 1), for example, analogue, digital or led in type which converts it into an indication readable by a user.

The control and processing circuit of the measurement device 35 operates according to conventional algorithms and starting from the reflected signal received for obtaining the signal indicative of the distance.

Furthermore, the measurement device 35 may be connected through the transmission line TL to the remote control centre CC of a plant, of which the tank is part, and intended to receive the information related to the level of the liquid.

It is to be noted that the transmission line TL on which the signal carrying the information about the level of the liquid in the tank may be sent may also be used, advantageously, to send other measurement signals related to other physical parameters of the liquid in the tank such as, for example, the temperature or pressure. Such additional physical parameters are measurable by corresponding sensors suitable for providing electrical signals and fed into the same processing and control circuit of the measurement device 35, which arranges for the forwarding of the corresponding information signals over the TL line. Such conventional sensors may be, for example, devices inside the same cavity 6 of the visual indicator 2.

Furthermore, the remote control centre CC, also on the basis of the signal related to the level of the liquid, may forward operational parameter controlling signals such as in order to control appropriate actuator bodies connected with the tank. For example, through analogue or digital signals, the control of relays, regulators, visual or acoustic alarms, filling pumps or discharge valves etc. is made possible.

. A remote interface means INT-1 may be connected to the control centre CC such as, for example, a display for allowing a user at the control centre CC to have the complete vision of the parameters of the tank such as, for example, the level, pressure and temperature of the liquid and therefore to be able to carry out operative selections in real time.

Advantageously, local interface means INT-2 may be envisaged, placed in close proximity to the apparatus 1 itself, which allow making available, for example, through another display the parameters relating to the level of liquid measured by the measurement device 35 and those relating to the pressure and/or temperature.

Such local interface means may allow the use of a processor for the programming of microprocessors inside the casing 36. Such programming, may be necessary in order to endow the received reflected signal data processing software with instructions corresponding to filtering (for example, digital) stages which allow the elimination of interference signals detrimental to the measurement.

It is important to note that the measurement carried out by a measurement device 35 such as that by microwave described above may be much more precise than that obtainable by the direct observation of the level of the liquid through the visual indicator 2. Indeed, within the cavity 6 of the visual indicator 2 may be present non-liquid state substances such as, predominantly, foams which impede the correct direct vision of the level.

Instead, the measurement device 35 may be calibrated in such a manner as to forward a direct or incident signal having such characteristics (for example, the frequency) as to be reflected only by substances having a dielectric constant greater than or equal to a pre-arranged minimum value related to the characteristics of the liquid. Whilst the incident signal passes through materials having dielectric constants less than the pre-arranged value without appreciable reflection. For example, such a minimum value of the relative dielectric constant is equal to 1.4.

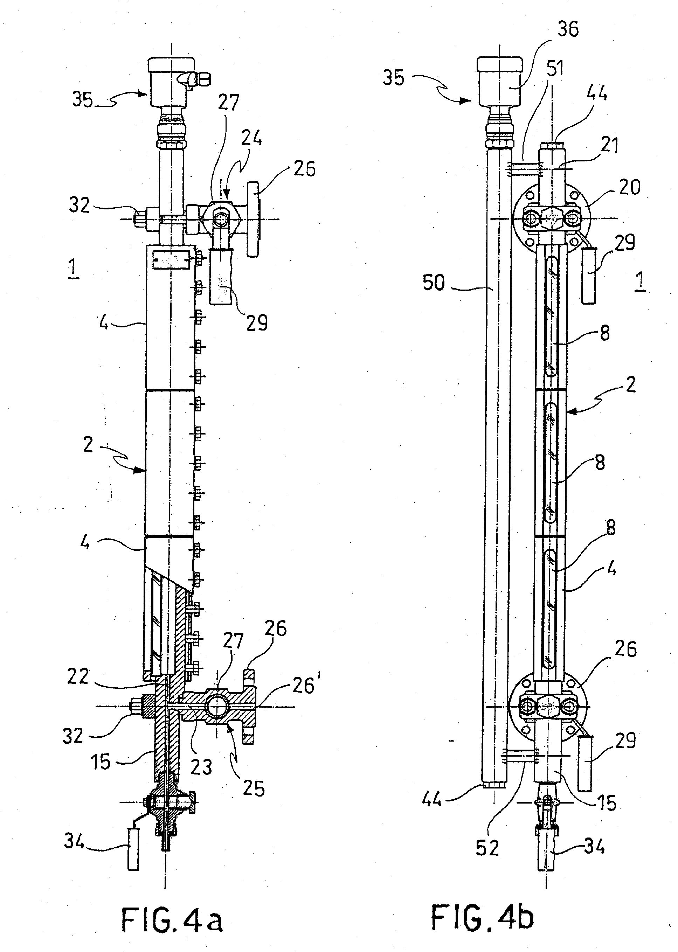

Figures 4A and 4B show a second embodiment of the apparatus 1 (hereinafter, denominated "parallel configuration") in accordance with which the measurement device 35 is at least partly housed within a container separate from the visual indicator 2. It is to be noted that in figures 4A and 4B and in the figures which will follow, the same numerical references will be used in order to indicate elements identical or analogous to those already defined.

According to the "parallel configuration" embodiment, the measurement device 35 is coupled to a tubular container 50 in a manner analogous to that mentioned previously (with reference to figures 1A and 1B) regarding the coupling to the container 5. Such tubular container 50 identifies a corresponding sealed inner cavity having, for example, circular cross section, the diameter of which may be selected with relative freedom. The guide cable 38 (not shown in the figures 4A, 4B) extends internally into such cavity of the tubular container 50.

The tubular container 50 is in liquid communication with the cavity 6 of the visual indicator 2 through an upper 51 and a lower 53 tube. The upper tube 51 and the lower tube 52 extend, respectively, between the upper stem 21 and one upper end of the tubular container 50 and between the lower stem 15 and one lower end of the tubular container 50. Such communication tubes 51 and 52 allow, by the principal of communicating vessels, to derive the tank liquid in such a manner that this has the same level as that reached inside the tank itself. It is observed that according to the "parallel configuration" embodiment, the upper stem 21 of the container 5 is closed by a closing element or stopper 44.

The parallel connection configuration is particularly advantageous for dense liquids which need to maximally exploit internal passageways, and for which the direct connection configuration (which envisages the guide cable 38 within the same cavity 6 of the visual indicator) may not be suitable.

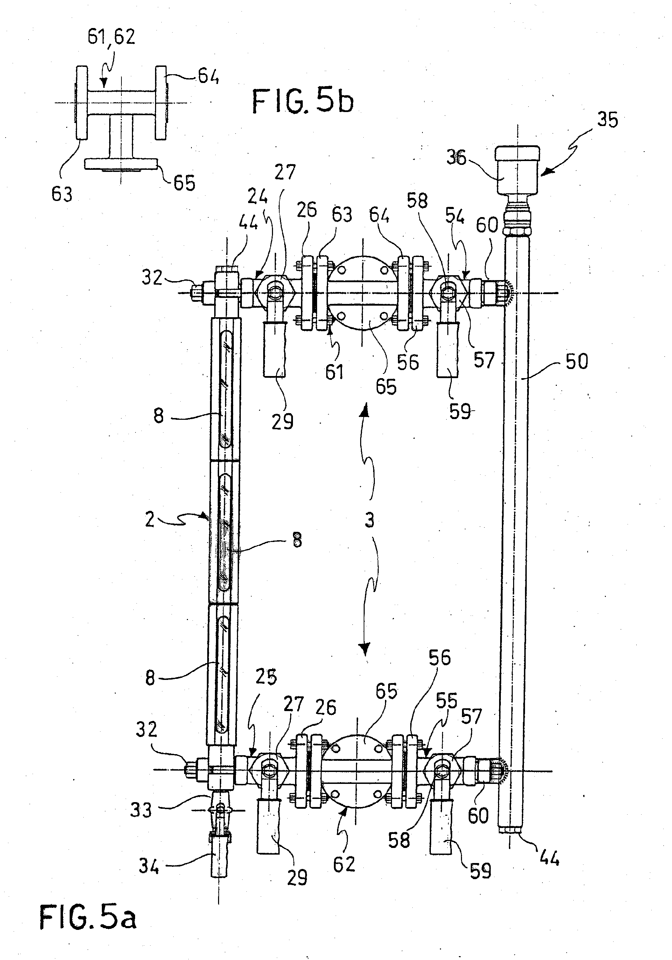

Figure 5A shows a third embodiment of the apparatus 1 (hereinafter, called "independent connection configuration") according to which the measurement device 35 is at least partly housed within the container 50 (distinct from the cavity 6) and wherein the visual indicator 2 and the container 50 are equipped with distinct and autonomous gates or taps for regulating the flow of liquid.

In greater detail, the apparatus of figure 5A comprises a visual indicator 2 completely analogous to that described with reference to figures 1B and 2B, equipped with their own upper and lower bypass units 24 and 25. The container 50, associated with the measurement device 35, is connected to an additional upper bypass unit 54 and to an additional lower bypass unit 55, structurally analogous to those 24 and 25 associated with the visual indicator 2. Each additional bypass unit 54 and 55 comprises a flange 56 (or, another type of connection) connected to a tap or gate valve 57, having a drive shaft 58 workable by a handle59.

Each flange 56 has a corresponding inlet 20 intended to be placed in communication with the tank to which the apparatus 1 is to be applied. At one end opposite to that of the flange 56, the additional unit 54 (or 55) is in communication with a connecting element 60 placed in communication with the sealed cavity defined by the container 50. Preferably, such connecting element 60 comprises a tubular body connected to the container 50 and a flange (for example, having rectangular cross section and formed from a single piece with the tubular body) to join with the corresponding flange of the additional bypass unit 54 (or 55).

Furthermore, the bypass structure of the apparatus 1 includes upper 61 and lower 62 junctional elements connected to the bypass units 24, 25, 54 and 55 and intended to be directly coupled with the tank. According to one particular example, the junctional elements 61 and 62 include a T-junction (see also figure 5C) formed by three short pipes equipped with corresponding flanges of which two (flanges 63 and 64) form one axis together and a third 65 is perpendicular to the axis identified by the previous ones.

Considering, for example, the upper junctional element 61, the flanges 63 and 64 forming an axis together are connected respectively to the flanges 26 and 56 of the upper bypass units 24 and 54 of the visual indicator 2 of the measurement device 35. The connection for the lower junctional element 62 occurs in an analogous manner.

It is to be noted that the presence of independent and separate taps (such as, for example taps 27 and 57) for tapping the liquid which affects the visual indicator 2 and that which affects the measurement device 35, is a particularly advantageous solution since it allows being able to intervene on one or the other level indicating devices (for example, for maintenance operations) without having to shut down the plant. Such a possibility is of particular use in the case of dangerous and/or very expensive liquids.

It is to be noted that for all three above described principal embodiments (direct connection configuration, parallel configuration and independent connection configuration) it is possible to use, for example, visual indicators having a different structure from those described up to now.

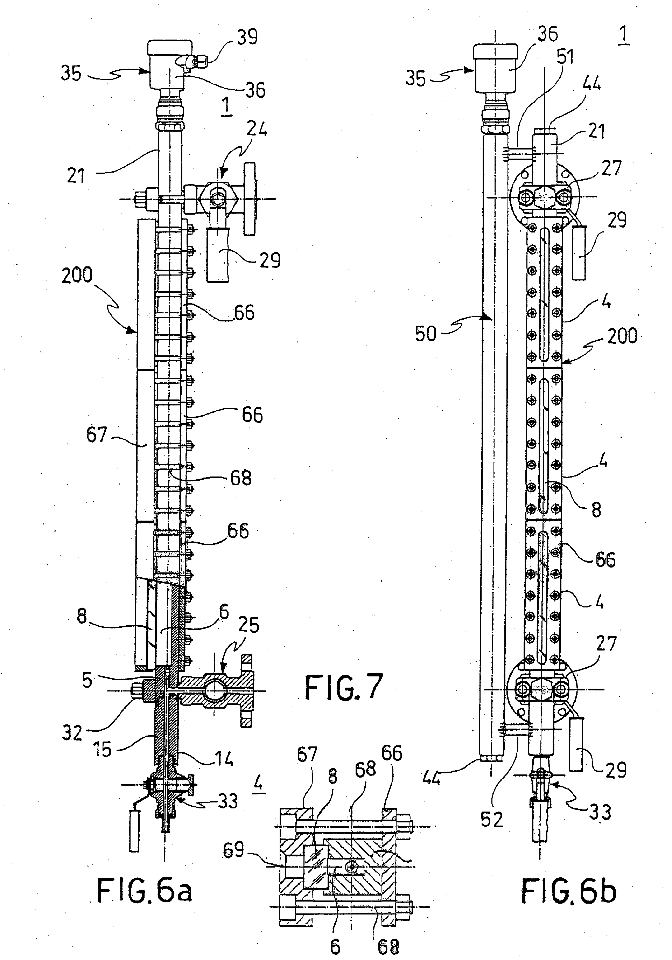

Accordingly, figures 6A and 6B show an apparatus 1 constructed according to the parallel configuration and using a second visual indicator 200 in place of that indicated by reference 2, and shown in the preceding figures. Such second visual indicator 200 is modular and reflective in type, in that it uses a reflective crystal. One module 4 of such second visual indicator 200, shown in the cross section of figure 7, includes a base plate 66 and a cover 67 such as a parallelepiped between which the reflective crystal 8is placed. The base plate 66 and the cover 67 are held in position by screws 68 (for example, socket head type) that extend externally and laterally to the container 5. The cover 67 is equipped with a window 69 (which extends along the longitudinal axis X-X) which allows the crystal 8 to be exposed. As is apparent to those skilled in the art, such second visual indicator 200 is also used in the direct connection or independent connection configuration type forms of execution.

It is observed that, as is apparent to those skilled in the art, the visual indicators described herein and in place of the first visual indicator 2 are intended to be fitted with appropriate sealing gaskets even if those are not explicitly described.

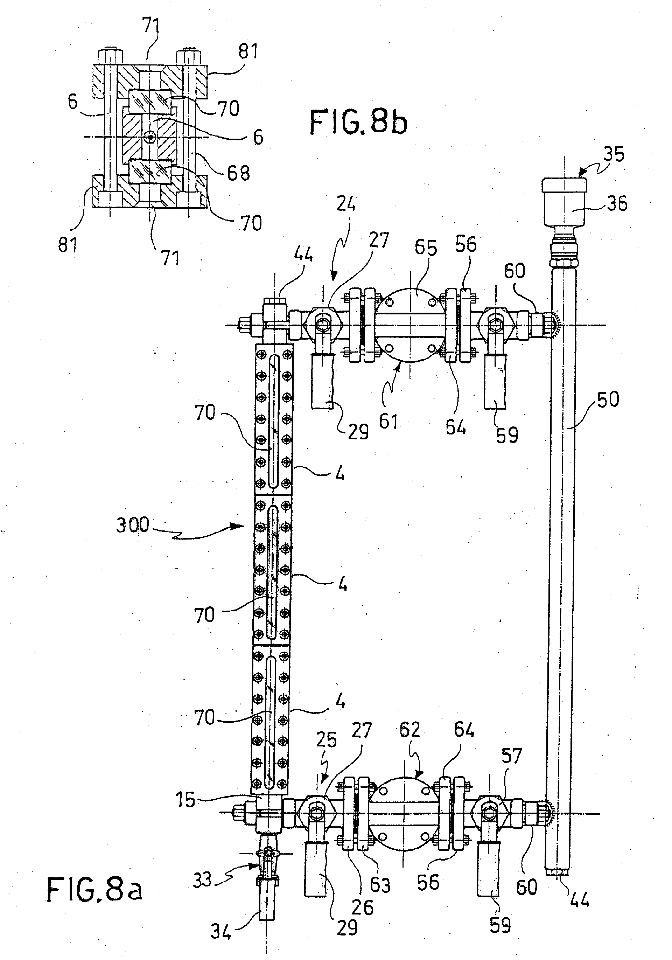

Figures 8A and 8B refer to another embodiment of the invention of the independent connection type which uses a third visual indicator 300, modular and transparent in type. This third visual indicator 300 uses, instead of the reflective crystal 8 at least one smooth transparent glass (*i*.*e*., without any graining). In more detail, and with reference to part of figure 8B, one module 4 of the third visual indicator 300 comprises the container 5 the cavity 6 thereof is faced on two opposing sides by two transparent glass elements 70. The fixing of the internal elements is made by two counteropposing covers 81 which act on the corresponding glass 70, held in position by socket head screws 68. Each cover 81 is equipped with a window 71 placed longitudinally (and parallel to the vertical axis X-X) which exposes the corresponding glass 70. Such third visual indicator 300 may be used, even in direct connection configurations.

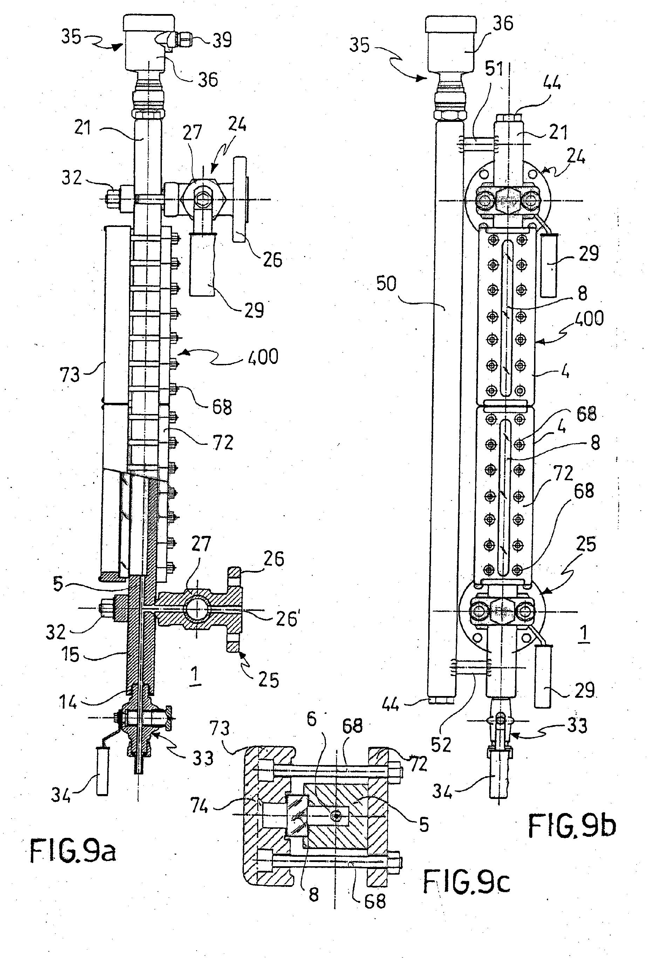

Figures 9A, 9B and 9C show one embodiment, of the parallel connection type, different to the previous ones, using a fourth visual indicator 400 wherein a reflective crystal is used. One module 4 of such fourth visual indicator 400, shown in the cross section of figure 9C, includes a base plate 72 and a cover73 between which are the reflective crystal 8 and the container 5. The base plate and the cover 73 are held in place by screws 68 (for example, socket head type) which extend externally and laterally to the container 5. The cover 73 is equipped with a window 74 (which extends along the longitudinal axis X-X) which allows the crystal 8 to be exposed. As is apparent to those skilled in the art, such fourth visual indicator 400 is also usable in the direct connection or independent connection configuration type forms of execution.

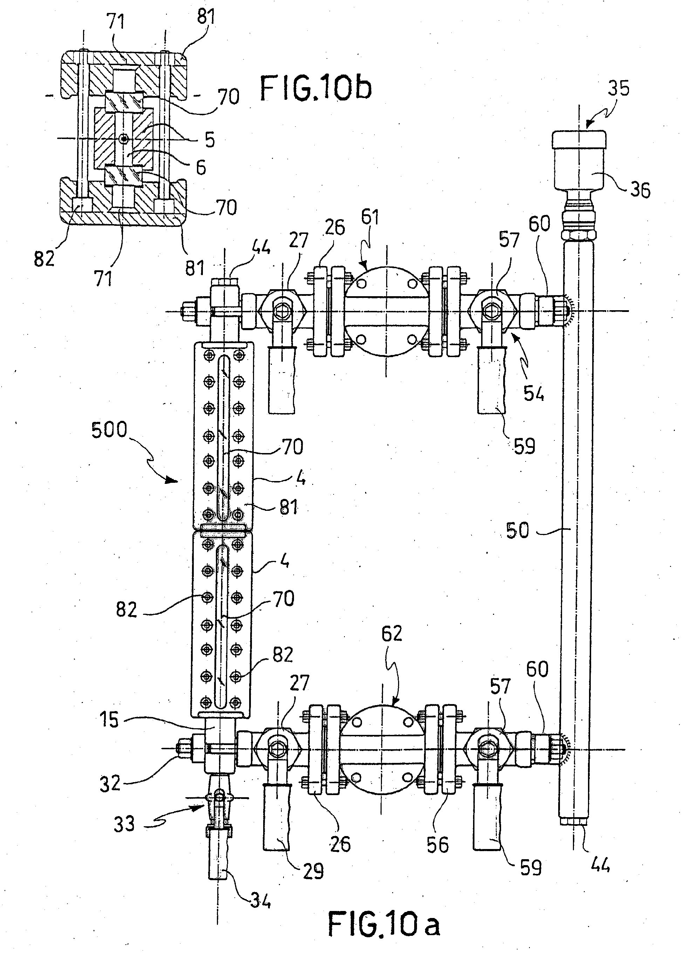

Figures 10A and 10B refer to an additional independent connection type embodiment of the apparatus 1 of the invention which uses, a fifth visual indicator 500, modular and transparent in type. In more detail, and with reference to part of figure 10B, one module 4 of the fifth visual indicator 500 comprises the container 5, the cavity 6 of which is faced on two opposite sides by two transparent glass elements 70. The fixing of the internal elements is brought about by two counteropposing covers 81 which act on the corresponding glass 70, held in place by corresponding pins 82. Each cover 81 is equipped with a window 71 placed longitudinally (and parallel to the vertical axis X-X) which exposes the corresponding glass 70. Such fifth visual indicator 500 may also be used in direct connection and parallel connection configurations.

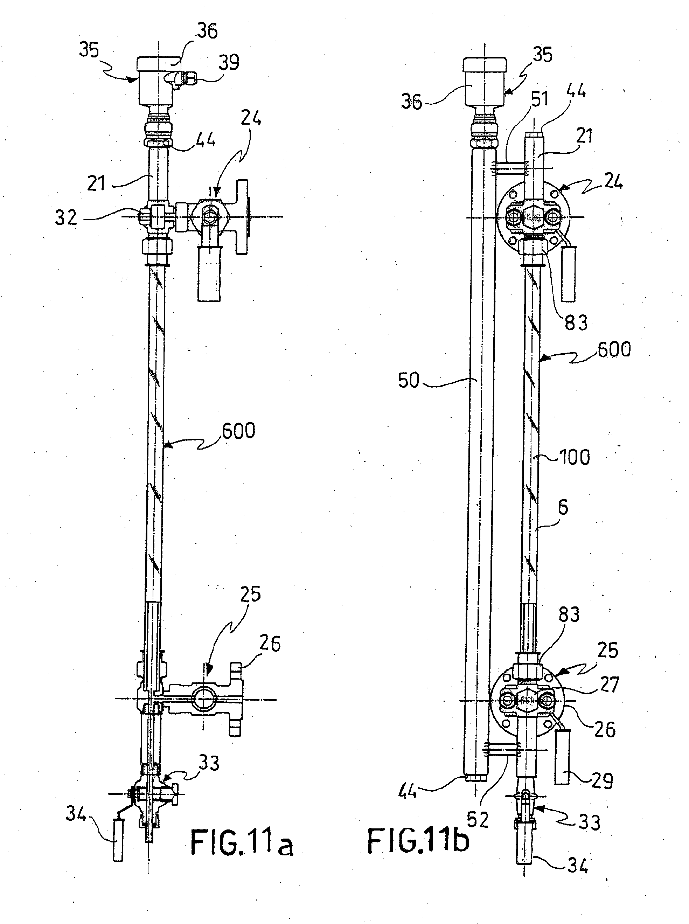

In figures 11A and 11B one embodiment of the apparatus 1 of the parallel connection type, and using a sixth visual indicator 600 comprising a single tube of transparent glass 100 which contains the liquid and which allows viewing inside it. Such sixth visual indicator 600 is fixed and placed in liquid communication with the upper 24 and lower 25 bypass units by conventional junctional elements 83 comprising threaded tubular stems. The sixth visual indicator 600 may also be used for the direct and independent connection configurations.

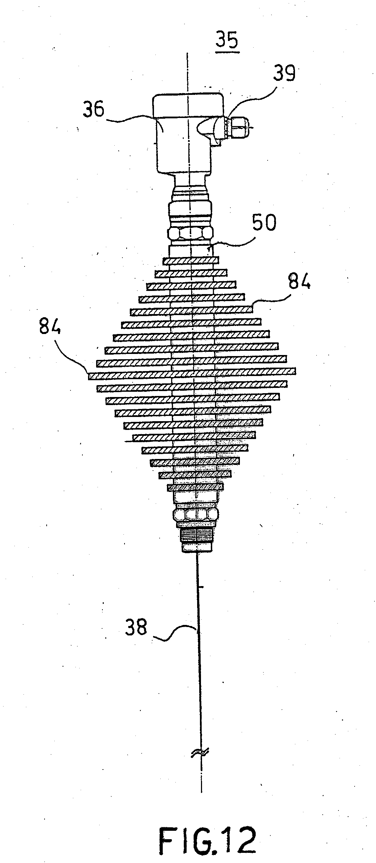

Figure 12 shows another variant embodiment of the present invention, according to which outside the tubular container 50 of the measurement device 35 are applied means for the dissipation of heat produced inside the container itself by the liquid derived from the tank. In particular, the dissipation of heat is obtained through a finned structure comprising plate-like radiating elements 84 for example, drilled in the centre in order to be passed through by the tubular container 50. The heat dissipation means may also be applied, for example, to the direct configuration of the apparatus 1.

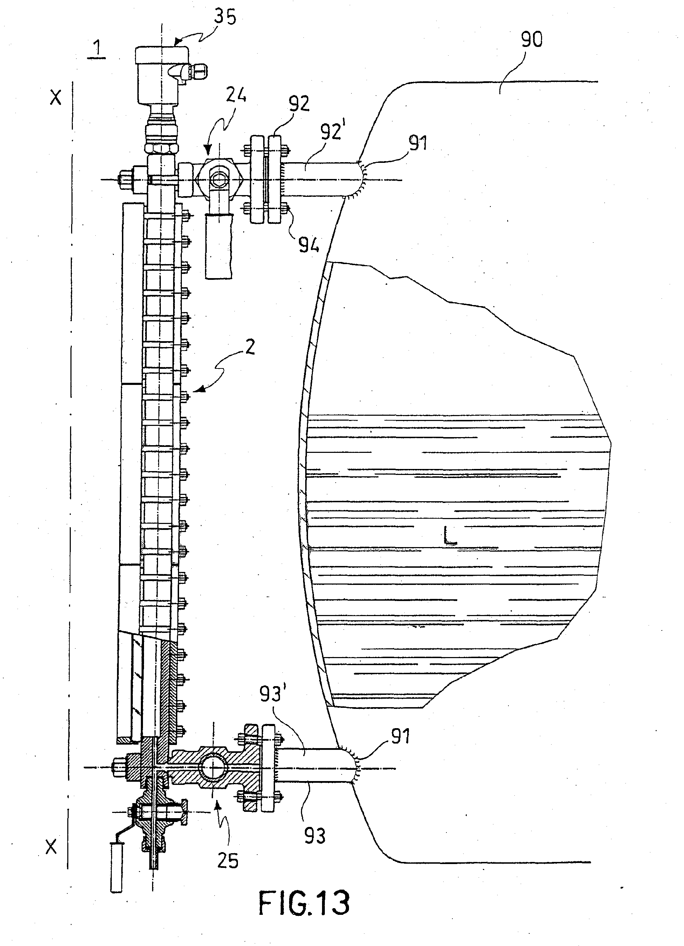

For completeness of description, figure 13 shows one example of how the apparatus 1 (made, for example, in the parallel connection configuration analogous to that of figures 6A and 6B) is applied to a tank 90.

The tank 90 is of the type suited to containing other liquids under pressure such as, for example, besides water and oil, all those liquids used in the pharmaceutical, chemical, oil sectors, etc.

According to this example, the tank 90 is endowed with two through holes or apertures 91 placed along the vertical axis X-X to which are applied a respective upper flange 92 associated with a tube 92' and a lower flange 93 associated with a corresponding tube 93'. The upper 92 and lower 93 flanges are connected, respectively, (by bolts 94) to the flange 26 of the upper bypass unit 24 and the lower bypass unit 25. Thus, the indicator apparatus 1 is oriented according to the vertical axis X-X and is connected to the tank 90 in two spaced apart and vertically aligned points. The upper and lower flanges 92 and 93, and the flanges 26 of the apparatus 1 ensure the communication of the liquid L from the tank to the cavity 6 of the visual indicator 2 and, if separate, to the other cavity associated with the measurement device 35. It is to be observed that, in place of the upper and lower flanges 92 and 93, other suitable types of tank connections or, according to the specific terminology of the sector, other types of "process connections", may be used.

It is to be noted that despite reference being made to a microwave-type liquid level measurement device in the above description, the present invention is also applicable to other measurement devices which operate on the basis of the irradiation of an incident signal and the reception of a reflected signal. For example, measurement devices which emit electromagnetic waves such as radar, infrared ray, laser type devices or those emitting sound waves, such as for example, ultrasound measurement devices may be used. Furthermore, it is noted that the reflected signal may be generated by the reflection off of the surface layers of the liquid, as previously described, or off of a float (for example, in which a hole for the passage of a guide cable 38 is made) purposely introduced into the cavity with which the measurement device is associated, in the case wherein the liquid has physical characteristics not suited to the reflection of the incident signal.

The present invention offers considerable advantages. Indeed, the apparatus 1 allows to add to the conventional detection offered by the direct observation of the visual indicator, the possibility of also having (analogue or digital) electrical signals available, which contain the information pertinent to the level of liquid, suitable for being transmitted towards the exterior of the apparatus (for example, towards remote positions). This allows, as best described above, to obtain an adequate integration of the liquid level measurement apparatus with additional measurement apparatus for other parameters and with automatic control and command centres with which the plant 90 of which the tank is part may be equipped.

The use of a liquid bypass structure (such as the structure 3) common both to the visual indicator, and the measurement device makes the apparatus 1 particularly easy to apply to a tank. The apparatus 1 is applicable externally to the tank 90 making the operations of installation or maintenance of the apparatus itself particularly easy which, instead, would be extremely difficult and taxing if the apparatus were also partly extended inside the tank.

Obviously, one skilled in the art, with the aim of satisfying contingent and specific needs may bring about numerous modifications and variations to the apparatus of the invention all, moreover, comprised within the scope of protection of the following claims.

## Claims

**1.** An apparatus (1) for the indication of the level of a liquid (L) contained within a tank (90), to be applied externally to the tank, comprising:
- a visual indicator (2; 300; 400; 500; 600) of the level of liquid having a sealed cavity (6) and at least one transparent wall (8; 70) for making the interior of the cavity visible,
- a liquid bypass structure (3) for supporting the visual indicator applicable to the tank and such as to allow the passage of liquid between the tank and the cavity,
**characterised by** further comprising a measurement device (35) suitable to transmit a signal carrying information relating to the level of the liquid in the tank to the outside of the apparatus, said device being operatively associated with the bypass structure (3) in such a manner that, for performing the measurement, it interacts with a liquid derivable from the tank through the structure itself.

**2.** The apparatus (1) according to claim 1, wherein the bypass structure forms a hydraulic circuit having at least one aperture (26,26') to be placed in communication with a conduit (91) formed in one wall of the tank.

**3.** The apparatus (1) according to claim 2, wherein the bypass structure is equipped with two apertures (26') connectable to respective conduits (91) formed in the walls of the tank allowing the bypassing of the liquid from the tank to the inside of the structure.

**4.** The apparatus (1) according to claim 3, wherein the cavity (6) of the visual indicator extends according to a longitudinal axis to be placed vertically; said apertures (26') of the bypass structure being in liquid communication with respective inlet (23) of the cavity (6) placed at the opposite longitudinal end of the cavity.

**5.** The apparatus (1) according to claim 1, wherein the visual indicator comprises a first container (5) which defines the cavity (6) therein.

**6.** The apparatus (1) according to claim 1, wherein the measurement device (35) is associated with the first container (5) for interacting with the liquid contained within the cavity (6).

**7.** The apparatus (1) according to claim 1, wherein the measurement device (35) is associated with a second container (50) which defines an additional sealed cavity connected to the bypass structure (3) for allowing it to be placed in communication with the interior of the tank, the measurement device interacting with the liquid contained within said additional cavity.

**8.** The apparatus (1) according to claim 1, wherein the bypass structure (3) is equipped with at least one gate (27,28) which allows the regulation of the flow of liquid from the bypass structure to the cavity.

**9.** The apparatus (1) according to claim 7, wherein the bypass structure (3 ) comprises at least one first gate valve (27,28) for regulating the flow of liquid which affects the cavity (6) of the visual indicator (2) and at least one second gate (57,58) independent of the first for regulating the flow of liquid which affects the additional cavity to which the measurement device {35) is associated.

**10.** The apparatus (1) according to claim 7, wherein the cavity (6) and the further cavity defined by the first container (50) are in liquid communication through at least one connection conduit (51, 52).

**11.** The apparatus (1) according to claim 1, wherein said measurement device (35) includes;
- a transmitter of an incident signal sent towards the liquid derived from the tank for generating a reflection signal,
- a receiving device for receiving the reflection signal from which to produce the signal carrying the information relating to the level of the liquid in the tank.

**12.** The apparatus (1) according to at least one of the preceding claims, wherein said transmitter is of such as to generate the incident signal in the form of electromagnetic radiation and is connected to an element of guided propagation (38) for the electromagnetic signal which extends from the transmitter towards the liquid, the transmitter being housed within a casing (36) placed in close proximity to a first outermost part of the cavity or of the additional cavity.

**13.** The apparatus (1) according to claim 12, wherein the element of guided propagation (38) is a substantially thread-like conductor having a first extremity (E-1) electrically connected to the transmitter and a second extremity (E-2) fixed in close proximity to an outermost part of said cavity or said additional cavity.

**14.** The apparatus (1) according to claim 13, wherein the measurement device includes means of fixing (40, 41,42) of the element of guided propagation (38) to the transmitter and/or in close proximity to said second part of the cavity such that said element of propagation assumes a substantially rectilinear configuration.

**15.** The apparatus (1) according to claim 14, wherein said means of fixing include rotatable hinging means (41) connected to one extremity of said guide element in such a manner as to avoid its tangling around itself during the assembly operations of the measurement device (35).

**16.** The apparatus (1) according to claim 15, wherein said means of fixing include an elastic element (42) for tightening the guide element and maintaining it in the substantially rectilinear configuration.

**17.** The apparatus (1) according to at least one of the preceding claims, wherein said casing (36) is equipped with means of fastening (37) to the first container (5) or to the second container (50).

**18.** The apparatus (1) according to claim 17, wherein said means of fastening (37) comprise a tubular threaded connecter 15 suitable for interacting with said first container (5) or with said second container (50).

**19.** The apparatus (1) according to at least one of the preceding claims, wherein to the first or second container to which the measurement device (35) is applied is associated a heat dissipater (84).

**20.** The apparatus (1) according to claim 11, wherein said incident signal is reflected off of the surface layers of the liquid or is reflected off of a float placed on the liquid of which the level is to be evaluated.

**21.** The apparatus (1) according to claim 11, wherein said measurement device (25) is at least one of the following measurement devices: microwave, radar, infrared ray, laser, sound wave, for example, ultrasound.

**22.** The apparatus (1) according to claim 13, wherein said second extremity (E-2) of the propagation element (38) is mechanically connected to a bleed tap (33) or to a stopper (44) applied to the second outermost part of said cavity (6) or of said additional cavity.

**22.** The apparatus (1) according to claim 13. wherein the propagation element (38) has a diameter with a value comprised of between 10% and 60% of the minimum diameter of said cavity (6) into which it extends.

**23.** The apparatus (1) according to claim 13, wherein said measurement device (35) includes a control and processing circuit for the reflected signal.

**24.** The apparatus (1) according to claim 23, additionally comprising at least one additional measurement device for a physical parameter of the liquid within the tank intended to generate an electrical measurement signal made available for the control and processing circuit.

**25.** The apparatus (1) according to claim 24, wherein said measurement device (35) comprises an output connecter (39) connectable to a transmission line (TL) over which to send the signal carrying the information relating to the level of liquid within the tank or another signal carrying information relating to said physical parameter.
